# EUROPÄISCHE PATENTSCHRIFT

(11) **EP 0 340 579 B1**
(45) Veröffentlichungstag und Bekanntmachung des Hinweises auf die Patenterteilung: **25.09.1996**
(21) Anmeldenummer: 89107341.3
(22) Anmeldetag: 24.04.1989
(51) Int. Cl.: B32B 27/32, B32B 27/18, G09F 3/04, B65D 65/40

(54) **Heisssiegelfähige Schrumpffolie auf Basis von Polypropylen, Verfahren zu ihrer Herstellung und ihre Verwendung für Schrumpfetiketten**
Heat-sealable shrink film based on polypropylene, process for making it and its use for shrinkable labels
Feuille en polypropylène, rétrécissable et scellable à chaud, procédé pour sa fabrication et son utilisation comme étiquette rétrécissable

(30) Priorität: 03.05.1988 DE 3814942
(43) Veröffentlichungstag der Anmeldung: 08.11.1989
(73) Patentinhaber: HOECHST AKTIENGESELLSCHAFT, 65926 Frankfurt am Main (DE)
(72) Erfinder: Schlögl, Gunter, Dr., D-6233 Kelkheim (DE); Peiffer, Herbert, Dr., D-6500 Mainz-Finthen (DE); Murschall, Ursula, Dr., D-6505 Nierstein (DE); Bothe, Lothar, Dr., D-6500 Mainz-Gonsenheim (DE); Crass, Günther, D-6204 Taunusstein 4 (DE)

(56) Entgegenhaltungen:
- EP-A- 0 051 480
- DE-A- 2 045 115
- DE-A- 3 026 317
- Ullmanns Encyklopädie der technischen Chemie, 4. Aufl., Band 12, Verlag Chemie, Weinheim 1976, 545
- Verpackungs-Rundschau 10/1983, 1121-1122

## Beschreibung

Die vorliegende Erfindung betrifft eine transparente schrumpffähige Folie umfassend eine Basisschicht enthaltend eine Mischung aus Polypropylen und Kohlenwasserstoffharz. Die Erfindung betrifft ferner ein Verfahren zur Herstellung einer solchen Folie und deren Verwendung als Schrumpfetiketten.

Aus "Verpackungsrundschau" 10/1983, 1121-1122, ist bereits bekannt, zylinderförmige oder annähernd zylinderförmige Verpackungseinheiten wie Flaschen oder Dosen vollumfänglich mit Rundumetiketten zu umschließen; diese Rundumetiketten werden in der angelsächsischen Literatur als sogenannte 'sleeves' bezeichnet. Die Folien für diesen Anwendungszweck sind z. B. aus Polyethylen, Polybutylen, Polystyrol, Polyethylen-Polypropylen-Copolymeren, Ethylen-Vinylacetat-Copolymeren, verschiedenen Blends, insbesondere aber aus Polyvinylchlorid. Zum Erreichen der für den gewünschten Anwendungszweck geeigneten Schrumpfeigenschaften der Folien in der Umfangsrichtung der Rundumetiketten werden die Folien im allgemeinen biaxial streckorientiert, was z. B. nach dem Bubble-, Stenter- oder Kalanderverfahren bewerkstelligt werden kann, wobei insbesondere die Orientierung in Querrichtung bevorzugt wird. Um ein wirklich faltenfreies Anliegen der Rundumetiketten an der Verpackungseinheit zu gewährleisten, werden als Schrumpfwerte z. B. Querschrumpf (s_{q}) von ungefähr 20 bis 40 % und Längsschrumpf (s₁) von etwa 7 bis 8 % bei einer Temperatur von 90 °C und einer Behandlungsdauer von 15 min im Umluftofen gefordert.

Die Schrumpffolien werden außerdem z. B. im Konterdruckverfahren bedruckt und anschließend zu einem Schlauch geklebt oder geschweißt. Durch den kontrollierten Querschrumpf legt sich der Schlauch im Schrumpfofen fest und faltenfrei um die Verpackungseinheit. Das Aufbringen des Etiketts erfolgt maschinell mit Hilfe von Bürsten oder wahlweise auch manuell. Außer dem gewünschten Schrumpf müssen die Rundumetiketten folgende Eigenschaften besitzen: hoher Glanz, glasklar, gute Gleitfähigkeit und Steifigkeit (≙ Produkt aus E-Modul und Dicke³) für die maschinelle Aufbringung des Etiketts, gute Bedruckbarkeit und gute Verschweiß-/Verklebbarkeit.

Für die wirtschaftliche Herstellung von Rundumetiketten ist es von großem Vorteil, wenn die Folien heißsiegelbar sind. Im Vergleich zum Kleben und Schweißen ist nämlich beim Siegeln der Zeitaufwand geringer, zudem kann Material eingespart werden.

Das gesamte bisher beschriebene Anforderungsprofil wird nach dem Stand der Technik am besten von PVC-Folie erreicht. Insbesondere wird durch das hohe Schrumpfvermögen und die guten optischen und mechanischen Eigenschaften nahezu der gesamte Anwendungsbereich abgedeckt. Die Gestalts- oder Durchmesseränderung der Verpackungseinheit, insbesondere der Dose oder Flasche, kann dabei im Bereich des Etiketts mehr als 30 % ausmachen.

Als Nachteil der Rundumetiketten aus PVC sind insbesondere der hohe Preis, der hauptsächlich aus der hohen Dichte von 1,39 kg/dm³ resultiert, die ca. 50 % höher ist als diejenige von z. B. PP, und eine verbesserungswürdige Heißsiegelbarkeit zu nennen. Ferner bestehen Probleme hinsichtlich Korrosion der Herstellungs- und Verarbeitungsaggregate (vgl. EP-A-0 233 400).

Die EP-A-0 051 480 beschreibt zwar eine heißsiegelfähige Folie auf Basis von PVC. Diese Folie ist jedoch nachteiligerweise sehr aufwendig in der Herstellung, da sie einen fünfschichtigen Aufbau vom Typ ABCBA besitzt. Die B-Schicht ist dabei ein Haftvermittler vom Typ Ethylen-Vinylacetat-Copolymer.

Es ist weiterhin bekannt, daß für die Rundumetikettenanwendung neben PVC vor allem Blends auf Basis von olefinischen Homo-, Co- und Terpolymeren verwendet werden. So beschreibt beispielsweise die Anmeldung JP-A-224 868 (Toray) eine in der Hitze schrumpfende Mehrschichtfolie auf Polypropylenbasis mit AB- oder ABA-Schichtaufbau. Schicht A besteht dabei aus einem statistischen Ethylen-Propylen-Copolymeren und Schicht B aus einem Blend aus einem statistischen Ethylen-Propylen-Copolymeren und einem Propylen-Butylen-Copolymeren. Der Schrumpf dieser Folie in Umfangsrichtung des gefertigten Sleeves wird mit s_{q} ≧ 15 % bei 100 °C angegeben, ferner ist die Folie aufgrund des gewählten Schichtaufbaus siegelfähig. Nachteilig an dieser Folie sind allerdings die auffallend niedrigen Werte für die mechanischen Eigenschaften. Betragen beim PVC die Werte für den E-Modul in Längsrichtung (E₁) ungefähr 2 600 bis 2 900 N/mm² und in Querrichtung (E_{q}) ungefähr 3 500 bis 3 800 N/mm², so betragen bei den polyolefinischen Folien die Werte im allgemeinen bei E₁ etwa 100 bis 1 100 N/mm² und E_{q} etwa 100 bis 1 500 N/mm². Um eine gleiche oder ähnlich gute Steifigkeit wie beim PVC zu bekommen, muß man die Dicke der polyolefinischen Folie um ca. 50 % anheben. Dies verteuert jedoch im gleichen Maße den Preis der Folie. Als weitere Nachteile der polyolefinischen Folien der JP-A gegenüber PVC sind der geringere Glanz und die höhere Trübung zu nennen.

Aus der EP-A-0 171 733 sind Folien der gattungsbildenden Art bekannt, die aus Copolymeren des Propylens mit anderen Alpha-Olefinen und einem Harzzusatz bestehen und für die akzeptable Schrumpfwerte angegeben sind. Diese Folie weist jedoch noch deutlich verbesserungswürdige mechanische Eigenschaften auf, und sie ist überdies nicht siegelfähig.

Die DE-A-30 26 317 beschreibt eine mehrschichtige Verpackungsfolie, deren Oberflächenschicht aus einem Polymerisat aus C₂/C₃-Copolymer und C₃/C₄₋₁₀-Copolymer und C₄-Copolymer besteht. Diese Folie kann in der Basisschicht ein niedrigmolekulares Harz in einer Menge von 2 bis 20 Gew.-% enthalten. Die Folie zeichnet sich durch ihre Siegeleigenschaften und ihre Schrumpffähigkeit aus. Gemäß der Beschreibung beträgt der Schrumpf bei 120 °C in Längs- und in Querrichtung mehr als 3,5 %. Diese Schrumpfeigenschaften gewährleisten eine faltenfreie und enganliegende Verpackung.

Die DE-A-20 45 115 beschreibt ein Polymerisatgemisch aus isotaktischem Polypropylen und Styrolkohlenwasserstoffharz. Gemäß dieser Lehre wird die Verträglichkeit des Styrolharzes mit dem Propylenpolymeren dadurch erhöht, daß mindestens 50 % seiner aromatischen Ungesättigtheiten hydriert sind. Folien aus dieser Polymerisatmischung sind vorteilhaft als Elektrofolie zu verwenden.

Die Aufgabe der vorliegenden Erfindung bestand nun darin, eine transparente, heißsiegelfähige und gut schrumpfbare Mehrschichtfolie für Rundumetiketten auf Basis von Polypropylen zu entwickeln, die gute optische und sehr gute mechanische Eigenschaften hat und dadurch vor allem wirtschaftliche Vorteile gegenüber Folien nach dem Stand der Technik ermöglicht.

Gelöst wird diese Aufgabe durch eine Folie der eingangs genannten Gattung, deren Kennzeichenmerkmale darin bestehen, daß die Basisschicht 60 bis 95 Gew.-% eines Propylenpolymeren und 5 bis 40 Gew.-% eines hydrierten Kohlenwasserstoffharzes mit einem Erweichungspunkt im Bereich von 80 bis 125 °C enthält, wobei die Prozentangaben bezogen sind auf das Gesamtgewicht der für die Basisschicht eingesetzten Mischung, und daß beidseitig auf der Basisschicht heißsiegelfähige Deckschichten angeordnet sind, und die Folie das im Anspruch 1 angegebene Schrumpfvermogen besitzt.

Das Propylenpolymere, in der Basisschicht ist ein isotaktisches Polypropylen mit einem n-heptanlöslichen Anteil von 10 Gew.-% oder weniger, wobei isotaktische Polypropylene mit einem n-heptanlöslichen Anteil von 2 bis 6 Gew.-% besonders bevorzugt sind.

Das Propylenpolymere der Basisschicht besitzt zweckmäßigerweise einen Schmelzflußindex von 0,5 g/10 min bis 8 g/10 min bei 230 °C und 2,16 kp Belastung (bestimmt nach DIN 53 735), inbesondere von 1,5 g/10 min bis 4 g/10 min.

Bei dem erfindungsgemäß in der Basisschicht auch noch enthaltenen Kohlenwasserstoffharz handelt es sich um ein niedrigmolekulares synthetisches Harz, das einen Erweichungspunkt in dem bevorzugten Bereich von 85 bis 110 °C aufweist, bestimmt gemäß DIN 1995-U4. Derartige Kohlenwasserstoffharze werden gewöhnlich aus harzbildenden Verbindungen wie Styrol, Methylstyrol, Vinyltoluol, Inden, Pentadien, Cyclopentadien u. ä. gebildet. Erfindungsgemäß werden insbesondere hydrierte Harze, insbesondere hydrierte Cyclopentadienharze, besonders bevorzugt. Die Farbzahl nach Saybold (gemäß ASTM D 158) ist größer als 20, vorzugsweise größer als 25.

Die heißsiegelfähigen Deckschichten enthalten eine niedrigsiegelnde Mischung von Homo-, Co- oder Terpolymeren aufgebaut aus Alpha-Olefinen mit 2 bis 4 C-Atomen.

Die Siegelschichten der erfindungsgemäßen Schrumpffolie bestehen aus siegelbaren olefinischen Polymeren. Geeignete Olefinpolymere sind Ethylenhomopolymere, Copolymere aus Ethylen und Propylen, Ethylen oder Propylen und Butylen oder einem anderen Alpha-Olefin mit 5 bis 10 Kohlenstoffatomen, Terpolymere aus Ethylen, Propylen und Butylen oder einem anderen Alpha-Olefin mit 5 bis 10 Kohlenstoffatomen oder Mischungen aus diesen Polymeren. Ethylen-Propylen-Copolymere, Ethylen-Butylen-Copolymere, Propylen-Butylen-Copolymere, Ethylen-Propylen-Butylen-Terpolymere oder Mischungen aus diesen Polymeren werden bevorzugt eingesetzt. Besonders bevorzugte Olefinpolymere für die Siegelschichten sind Ethylen-Propylen-Copolymere mit Propylen als Hauptkomponente und einem Ethylengehalt von 2 bis 10 Gew.-% (bezogen auf das Copolymere), Propylen-Butylen-Copolymere mit Propylen als Hauptkomponente und einem Butylengehalt von 0,5 bis 25 Gew.-% (bezogen auf das Copolymere) und Ethylen-Propylen-Butylen-Terpolymere mit Propylen als Hauptkomponente, 0,5 bis 7 Gew.-% Ethylen und 5 bis 30 Gew.-% Butylen (Gewichtsprozent bezogen auf das Terpolymere) sowie Mischungen aus diesen Polymeren. Bei den Co- und Terpolymeren handelt es sich um statistische Polymere.

Das Olefinpolymere der Siegelschichten hat einen niedrigeren Schmelzpunkt als das Propylenpolymere der Basisschicht. Der Schmelzflußindex des Olefinpolymeren bzw. der Olefinpolymermischung liegt höher als jener des Propylenpolymeren der Basisschicht. Das Olefinpolymere bzw. die Mischung für die Siegelschichten hat einen Schmelzflußindex von im allgemeinen 1 bis 12 g/10 min, vorzugsweise 3 bis 9 g/10 min, bei 230 °C und 2,16 kp Belastung (DIN 53 735).

Um bestimmte Eigenschaften der erfindungsgemäßen Polyolefinfolie noch weiter zu verbessern, können sowohl die Basisschicht als auch die beiden Siegelschichten entsprechende Zusätze in einer jeweils wirksamen Menge enthalten, vorzugsweise Antistatika, Antiblockmittel und Gleitmittel.

Bevorzugte Antistatika sind Alkali-alkansulfonate und im wesentlichen geradkettige und gesättigte aliphatische, tertiäre Amine mit einem aliphatischen Rest mit 10 bis 20 Kohlenstoffatomen, die mit 2-hydroxyalkyl-(C₁-C₄)-Gruppen substituiert sind, worunter N,N-bis-(2-hydroxyethyl)-alkylamine mit C₁₀-C₂₀, vorzugsweise C₁₂-C₁₈, als Alkylgruppen besonders geeignet sind. Die wirksame Menge an Antistatikum liegt im Bereich von 0,05 bis 3 Gew.-%, bezogen auf die Schicht.

Als besonders zweckmäßig hat sich die Ausrüstung der Basisschicht mit 0,1 bis 0,3 Gew.-% eines N,N-bis-ethoxyalkylamins mit einem aliphatischen Rest mit 10 bis 20 Kohlenstoffatomen erwiesen.

Nach einer weiteren bevorzugten Ausführungsform enthält mindestens eine Siegelschicht 0,1 bis 0,8 Gew.-%, bevorzugt 0,15 bis 0,3 Gew.-%, eines Antiblockmittels einer mittleren Teilchengröße von 0,5 bis 3 µm, bevorzugt von 1 bis 2 µm.

Geeignete Antiblockmittel sind anorganische Zusatzstoffe wie Siliciumdioxid, Calciumcarbonat, Magnesiumsilikat, Aluminiumsilikat, Calciumphosphat und dergleichen und/oder unverträgliche organische Polymerisate wie Polyamide, Polyester, Polycarbonate und dergleichen. Siliciumdioxid oder Calciumcarbonat werden bevorzugt als Antiblockmittel eingesetzt.

Beispiele für Gleitmittel sind höhere aliphatische Säureamide, höhere aliphatische Säureester, Wachse und Metallseifen sowie Polydimethylsiloxan. Die wirksame Menge an Gleitmittel liegt im Bereich von 0,1 bis 2 Gew.-%, bezogen auf das Gewicht der Schicht. Als besonders geeignet hat sich der Zusatz von höheren aliphatischen Säureamiden (z. B. Erucasäureamid) mit 0,15 bis 0,25 Gew.-% in der Basisschicht erwiesen. Sehr gute Ergebnisse werden auch durch den Zusatz von Polydimethylsiloxan in diejenige Siegelschicht erreicht, die nicht oberflächenbehandelt wird. Die Zusatzmenge liegt zweckmäßig im Bereich von 0,5 bis 1,5 Gew.-%, wobei die Viskosität des Polydimethylsiloxans zwischen 1 000 und 100 000 mm²/s liegt.

Die Dicke der erfindungsgemäßen Folie liegt im Bereich von 15 bis 50 µm, vorzugsweise von 20 bis 45 µm, wobei die Siegelschichten eine Dicke von 0,5 bis 1,0 µm aufweisen.

Die im vorstehenden bezüglich ihrer chemischen Zusammensetzung beschriebene erfindungsgemäße Folie zeichnet sich durch ein besonders hohes Schrumpfvermögen in Querrichtung bei relativ niedrigen Temperaturen (90 °C) und gleichzeitig durch besonders niedriges Schrumpfvermögen in Längsrichtung aus. Insbesondere besitzt die Folie ein Schrumpfvermögen von mehr als 15 % bei 90 °C und von mehr als 35 % bei 120 °C in Querrichtung und gleichzeitig ein Schrumpfvermögen von weniger als 6 % bei 90 °C und von weniger als 15 % bei 120 °C in Längsrichtung, wobei die Prozentangaben jeweils bezogen sind auf die jeweilige Längenausdehnung der Folie vor dem Schrumpfprozeß. Die angegebenen Schrumpfwerte sind jeweils im Umluftofen bei einer Dauer von 15 min gemäß DIN 406 34 ermittelt worden. Vorzugsweise liegt das Schrumpfvermögen der erfindungsgemäßen Folie in Querrichtung in einem Bereich von 15 bis 22 % bei 90 °C und von 35 bis 45 % bei 120 °C und in Längsrichtung in einem Bereich von 2 bis 6 % bei 90 °C und von 8 bis 15 % bei 120 °C, jeweils bezogen auf die Längenausdehnung der Folie vor dem Schrumpfprozeß.

Neben diesen hervorragenden Schrumpfeigenschaften besitzt die erfindungsgemäße Folie zusätzlich ebenfalls besonders wünschenswerte mechanische Eigenschaften. Der Elastizitätsmodul wird mit einem Zug-Dehnungsgerät der Firma Zwick in Ulm-Einsingen des Typs 1445 gemäß DIN 53 455 bestimmt. Die erfindungsgemäße Folie besitzt danach einen E-Modul in Längsrichtung von mehr als 2 000 N/mm², bevorzugt von 2 200 bis 2 600 N/mm², und einen E-Modul in Querrichtung von mehr als 4 000 N/mm², vorzugsweise von 4 500 N/mm² bis 5 500 N/mm².

Ein anderer physikalischer Parameter, der die mechanischen Eigenschaften der erfindungsgemäßen Folie verdeutlicht, ist die Reißfestigkeit, die ebenfalls nach DIN 53 455 bestimmt wird. Die Schrumpffolie gemäß der Erfindung weist eine Reißfestigkeit in Längsrichtung von mehr als 130 N/mm², vorzugsweise im Bereich von 145 bis 185 N/mm², auf und in Querrichtung von mehr als 220 N/mm², vorzugsweise im Bereich von 235 bis 290 N/mm².

Auch die optischen Eigenschaften der erfindungsgemäßen Folie sind überraschenderweise hervorragend. Der Glanzwert liegt im Bereich von 95 bis 110, bestimmt nach DIN 67 530 bzw. ASTM-D 523, und die Trübung der Folie beträgt etwa 20 bis 30 %, wobei die Trübung der Folie in Anlehnung an ASTM-D 1003-52 gemessen wird. An Stelle einer 4°-Lochblende wird eine 1°-Spaltblende eingesetzt und die Trübung in Prozent wird für vier übereinanderliegende Folienlagen angegeben. Die vier Lagen wurden gewählt, da man hierdurch den optimalen Meßbereich ausnutzt.

Die eingangs genannte Aufgabe der Erfindung wird auch durch ein Verfahren zur Herstellung der vorstehend beschriebenen Folie gelöst. Das erfindungsgemäße Verfahren besteht darin, daß mittels Coextrusion in einer Breitschlitzdüse zunächst eine Vorfolie hergestellt wird, die dann auf einer Kühlwalze verfestigt und daran anschliessend in Längs- und Querrichtung durch Strecken orientiert wird. Erfindungsgemäß werden die Bedingungen in der Längsstreckung so gewählt, daß die längsgestreckte Folie nur wenig orientiert ist. Die Voraussetzungen für die Erzielung eines hohen Querschrumpfes und eines niedrigen Längsschrumpfes sind dann besonders günstig. Ein gebräuchliches Maß für die Beurteilung des Ausmaßes der Orientierung der längsgestreckten Folie ist die Doppelbrechung Δn. Die erfindungsgemäße Folie zeichnet sich dadurch aus, daß die Doppelbrechung der längsgestreckten, aber noch nicht quergestreckten Folie einen Wert von Δn = 12 bis 15 · 10⁻³ nicht übersteigt. Vorzugsweise sollte die Doppelbrechung Δn < 10 · 10⁻³ betragen. Die Längsstreckung wird durchgeführt bei einer Temperatur von mehr als 130 °C, vorzugsweise im Bereich von 135 bis 150 °C, und mit einem Streckverhältnis von kleiner 4,5, vorzugsweise im Bereich von 3 bis 4.

Überraschenderweise hat sich gezeigt, daß bei diesen Bedingungen die Querstrecktemperatur T_{q} sehr viel niedriger gewählt werden kann als dies sonst üblich ist und dennoch sehr gute Prozeßsicherheit gewährleistet ist. Erfindungsgemäß wird die Streckung in Querrichtung bei einer Temperatur von weniger als 130 °C durchgeführt, vorzugsweise von weniger als 120 °C. Das Streckverhältnis in Querrichtung beträgt erfindungsgemäß mehr als 7,5, vorzugsweise im Bereich von 8 bis 11.

Nach der Streckung der Folie in Querrichtung schließt sich eine abschließende Fixierstufe an. Dabei wird die Folie bei einer Temperatur von 20 bis 40 °C unterhalb der Strecktemperatur, insbesondere bei einer Temperatur unterhalb von 110 °C, vorzugsweise von unterhalb von 80 °C, in dem Streckrahmen, eventuell leicht konvergierend, weitergeführt. Die Konvergenz während der Fixierstufe beträgt vorzugsweise 5 bis 15 %.

Die Bedruckbarkeit der Folie wird durch eine der üblichen Oberflächenbehandlungen vor dem Aufrollen erreicht, z. B. Flammbehandlung oder elektrische Coronabehandlung.

Zur Coronabehandlung, die nach einer der bekannten Methoden durchgeführt werden kann, wird zweckmäßigerweise so vorgegangen, daß die Folie zwischen zwei als Elektroden dienenden Leiterelementen hindurchgeführt wird, wobei zwischen den Elektroden eine so hohe Spannung, meist Wechselspannung (etwa 10 000 V und 10 000 Hz), angelegt ist, daß Sprüh- oder Coronaentladungen stattfinden können. Durch die Sprüh-oder Coronaentladungen wird die Luft oberhalb der Folienoberfläche ionisiert und verbindet sich mit den Molekülen auf der Folienoberfläche, so daß polare Einlagerungen in der im wesentlichen unpolaren Polymermatrix entstehen.

Die Behandlungsintensitäten liegen im üblichen Rahmen. Behandlungsintensitäten von 38 bis 42 mN/m sind bevorzugt.

Zur Bedruckung wird die Folie vorzugsweise im Konterdruck bedruckt.

Die so hergestellte Schrumpffolie besitzt eine Kombination von Eigenschaften, die sie in besonders hohem Maß geeignet macht für ihren bestimmungsgemäßen Verwendungszweck als Folie für Rundumetiketten. Ihr bevorzugtes Einsatzgebiet ist vor allem dort zu sehen, wo die Gestaltänderung der Dose oder Flasche im Bereich der Etikettierung weniger als 15 bis 20 % ausmacht.

Die im vorstehenden in allen Einzelheiten beschriebene erfindungsgemäße Folie soll nachfolgend durch ein Ausführungsbeispiel noch deutlicher erläutert werden.

### Beispiel

- A-Basisschicht:: 89,6 Gew.-% isotaktisches Polypropylen,
10 Gew.-% hydriertes Cyclopentadienharz mit einer Erweichungstemperatur von 90 °C,
0,2 Gew.-% N,N-bis-ethoxyalkylamin und
0,2 Gew.-% Erucasäureamid
- B-Deckschicht:: 1 : 1-Mischung aus
1.) statistischen Ethylen-Propylen-Buten-1-Copolymeren mit einem C₂-Gehalt von 1,4 Gew.-%, einem C₃-Gehalt von 95,8 Gew.-% und einem C₄-Gehalt von 2,8 Gew.-% und
2.) einem statistischen Propylen-Buten-1-Copolymeren mit einem C₄-Gehalt von 66,8 Gew.-%

Der Schmelzindex der Mischung beträgt 8 g/10 min. Als Antiblockmittel wurden dem Siegelrohstoff 0,2 Gew.-% Calciumcarbonat mit einer mittleren Teilchengröße von 2 µm zugesetzt.

Diese ABA-Folie wird über die Verfahrensschritte Coextrusion, Abkühlen, Längsstreckung, Querstreckung, Fixierung hergestellt. Die Gesamtdicke der Folie beträgt 30 µm, die Dicke der Siegelschichten 0,7 µm. Die Herstellungsbedingungen in den einzelnen Verfahrensschritten sind:

| | | |
|---|---|---|
| Extrusion: | Temperaturen A-Schichten | 230 °C |
| | B-Schicht | 270 °C |
| | Temperatur der Abzugswalze | 30 °C |
| Längsstreckung: | Temperatur T = 140 °C | |
| | Längsstreckverhältnis λ= 4,0 | |
| Querstreckung: | Temperatur T = 115 °C | |
| | Querstreckverhältnis λ= 11 | |
| Fixierung: | Temperatur T = 70 °C | |
| | Zeitdauer t = 1 s | |

Die auf diese Weise hergestellte Folie hat die in der Tabelle aufgelisteten Eigenschaften (letzte Zeile). Die Folie wurde vor der Aufrollung einer Coronabehandlung unterzogen, um eine Bedruckbarkeit zu gewährleisten. Die Behandlungsintensität betrug 40 mN/m.

In der Tabelle wurden der erfindungsgemäßen Folie eine PVC-Folie, Folien gemäß zweier angegebener japanischer Vorveröffentlichungen sowie eine unter ähnlichen wie den erfindungsgemäßen Bedingungen hergestellte Polypropylenfolie ohne Harzzusatz und ohne Deckschichten gegenübergestellt. Ein Vergleich der ausgewiesenen Eigenschaften zeigt, daß sich die erfindungsgemäße Folie insbesondere im Hinblick auf die aufgabengemäß angestrebte Eigenschaftskombination allen bekannten Folien als überlegen erweist.

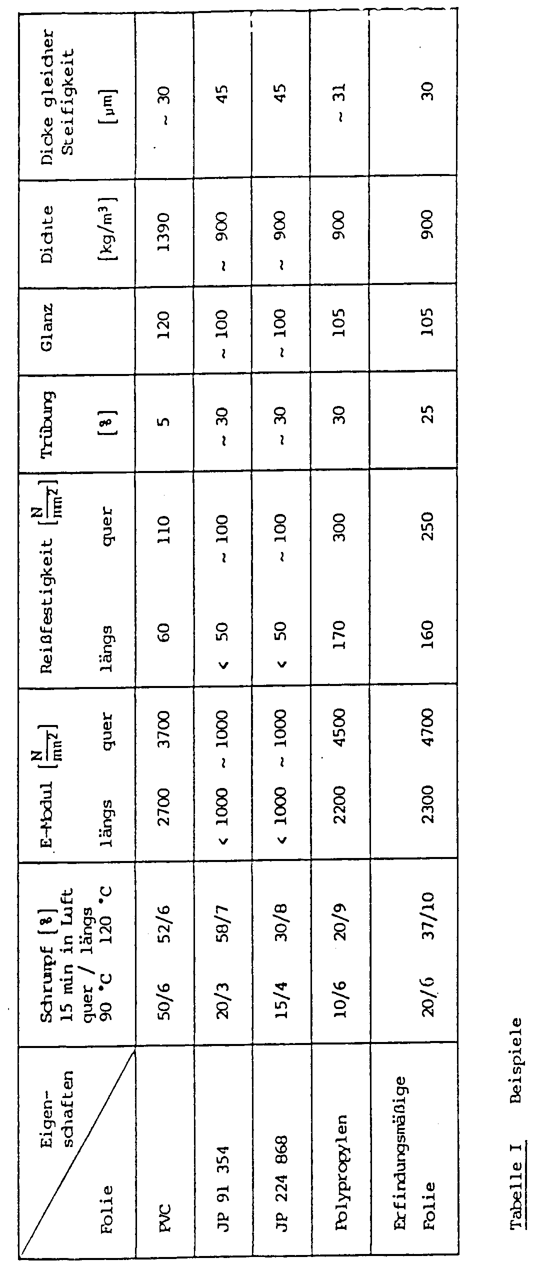

## Patentansprüche

1. Transparente schrumpffähige Folie umfassend eine Basisschicht enthaltend eine Mischung aus Polypropylen und Kohlenwasserstoffharz, dadurch gekennzeichnet, daß die Basisschicht 60 bis 95 Gew.-% eines Propylenpolymeren und 5 bis 40 Gew.-% eines hydrierten Kohlenwasserstoffharzes mit einem Erweichungspunkt im Bereich von 80 bis 125°C enthält, wobei die Prozentangaben bezogen sind auf das Gesamtgewicht der für die Basisschicht eingesetzten Mischung, und daß beidseitig auf der Basisschicht heißsiegelfähige Deckschichten angeordnet sind, und daß die Folie ein Schrumpfvermögen von mehr als 15% bei 90°C und von mehr als 35% bei 120°C in Querrichtung und von weniger als 6% bei 90°C und von weniger als 15% bei 120°C in Längsrichtung besitzt, wobei die Prozentangaben jeweils bezogen sind auf die jeweilige Längenausdehnung der Folie vor dem Schrumpfprozeß wobei die angegebenen Schrumpfwerte jeweils im Umluftofen bei einer Dauer von 15 min gemäß DIN 406 34 ermittelt werden.

2. Folie gemäß Anspruch 1, dadurch gekennzeichnet, daß das hydrierte Kohlenwasserstoffharz ein synthetisches Harz ist, das einen Erweichungspunkt in dem Bereich von 85 bis 110°C aufweist.

3. Folie gemäß Anspruch 1 oder 2, dadurch gekennzeichnet, daß die Deckschichten, die beidseitig auf der Basisschicht angeordnet sind, ein siegelbares olefinisches Polymeres enthalten, umfassend Ethylenhomopolymere, Copolymere aus Ethylen und Propylen, Ethylen oder Propylen und Butylen oder einem anderen Alpha-Olefin mit 5 bis 10 Kohlenstoffatomen, Terpolymere aus Ethylen, Propylen und Butylen oder einem anderen Alpha-Olefin mit 5 bis 10 Kohlenstoffatomen oder Mischungen aus diesen Polymeren.

4. Folie gemäß Anspruch 3, dadurch gekennzeichnet, daß die Deckschichten Ethylen-Propylen-Copolymere, Ethylen-Butylen-Copolymere, Propylen-Butylen-Copolymere, Ethylen-Propylen-Butylen-Terpolymere oder Mischungen aus diesem Polymerem enthalten.

5. Folie gemäß einem der Ansprüche 1 bis 4, dadurch gekennzeichnet, daß sie eine Dicke im Bereich von 15 bis 50 µm, vorzugsweise von 20 bis 45 µm, aufweist, wobei die Deckschichten eine Dicke von 0,5 bis 1,0 µm aufweisen.

6. Folie gemäß einem der Ansprüche 1 bis 5, dadurch gekennzeichnet, daß sie einen E-Modul in Längsrichtung von mehr als 2 000 N/mm² und einen E-Modul in Querrichtung von mehr als 4 000 N/mm² besitzt.

7. Folie gemäß einem der Ansprüche 1 bis 6, dadurch gekennzeichnet, daß sie eine Reißfestigkeit in Längsrichtung von mehr als 130 N/mm² und eine Reißfestigkeit in Querrichtung von mehr als 220 N/mm² besitzt.

8. Verfahren zur Herstellung einer Folie gemäß einem der Ansprüche 1 bis 7, bei dem mittels Coextrusion in einer Breitschlitzdüse zunächst eine Vorfolie hergestellt wird, die dann auf einer Kühlwalze verfestigt und daran anschliessend in Längs- und Querrichtung durch Strecken orientiert wird, dadurch gekennzeichnet, daß die Bedingungen in der Längsrichtung so eingestellt werden, daß die Doppelbrechung der längsgestreckten, aber noch nicht quergestreckten Folie einen Wert von Δn = 12 bis 15 · 10⁻³ nicht übersteigt.

9. Verfahren nach Anspruch 8, dadurch gekennzeichnet, daß die Längsstreckung bei einer Temperatur von mehr als 130°C, vorzugsweise im Bereich von 135 bis 150°C, mit einem Streckverhältnis von kleiner 4,5, vorzugsweise im Bereich von 3 bis 4, durchgeführt wird und daß die Streckung in Querrichtung bei einer Temperatur von weniger als 130°C, vorzugsweise von weniger als 120°C, mit einem Streckverhältnis in Querrichtung von mehr als 7,5, vorzugsweise im Bereich von 8 bis 11, durchgeführt wird.

10. Verfahren nach einem der Ansprüche 8 bis 9, dadurch gekennzeichnet, daß nach der Streckung der Folie in Querrichtung eine abschließende Fixierstufe angeschlossen ist, in der die Folie bei einer Temperatur von 20 bis 40°C unterhalb der Strecktemperatur, insbesondere bei einer Temperatur unterhalb von 110°C, vorzugsweise von unterhalb von 80°C, in dem Streckrahmen, weitergeführt wird.

11. Verfahren nach Anspruch 10, dadurch gekennzeichnet, daß die Konvergenz während der Fixierstufe 5 bis 15% beträgt.

12. Verwendung einer Folie nach einem der Ansprüche 1-7 als Schrumpfetikett.

## Claims

1. A transparent shrinkable film consisting of a base layer comprising a mixture of polypropylene and hydrocarbon resin, wherein the base layer comprises from 60 to 95% by weight of a propylene polymer and from 5 to 40% by weight of a hydrogenated hydrocarbon resin having a softening point in the range from 80 to 125°C, the percentages being based on the total weight of the mixture employed for the base layer, and wherein heat-sealable outer layers are arranged on both sides of the base layer, and wherein the film has a shrink capacity of greater than 15% at 90°C and of greater than 35% at 120°C in the transverse direction and of less than 6% at 90°C and of less than 15% at 120°C in the longitudinal direction, the percentages in each case being based on the respective length elongation of the film before the shrink process, and the shrink values indicated in each case being determined in a circulating-air oven over a period of 15 min in accordance with DIN 406 34.

2. A film as claimed in claim 1, wherein the hydrogenated hydrocarbon resin is a synthetic resin having a softening point in the range from 85 to 110°C.

3. A film as claimed in claim 1 or 2, wherein the outer layers arranged on both sides of the base layer comprise a heat-sealable olefinic polymer, including ethylene homopolymers, copolymers of ethylene and propylene, ethylene or propylene and butylene or another alpha-olefin having 5 to 10 carbon atoms, terpolymers of ethylene, propylene and butylene or another alpha-olefin having 5 to 10 carbon atoms, or mixtures of these polymers.

4. A film as claimed in claim 3, wherein the outer layers comprise ethylene-propylene copolymers, ethylene-butylene copolymers, propylene-butylene copolymers, ethylene-propylene-butylene terpolymers or mixtures of these polymers.

5. A film as claimed in one of claims 1 to 4, having a thickness in the range from 15 to 50 µm, preferably from 20 to 45 µm, the outer layers having a thickness of from 0.5 to 1.0 µm.

6. A film as claimed in one of claims 1 to 5, having a modulus of elasticity in the longitudinal direction of greater than 2000 N/mm² and a modulus of elasticity in the transverse direction of greater than 4000 N/mm².

7. A film as claimed in one of claims 1 to 6, having a tear strength in the longitudinal direction of greater than 130 N/mm² and a tear strength in the transverse direction of greater than 220 N/mm².

8. A process for the production of a film as claimed in one of claims 1 to 7, in which a prefilm is first produced by coextrusion in a flat-film die, then solidified on a chill roll and subsequently oriented in the longitudinal and transverse directions by stretching, which comprises setting the conditions in the longitudinal direction so that the birefringence of the film after longitudinal stretching, but before transverse stretching does not exceed a value of Δn = 12 to 15 · 10⁻³.

9. The process of claim 8, wherein the longitudinal stretching is carried out at a temperature of greater than 130°C, preferably in the range from 135 to 150°C, at a stretching ratio of less than 4.5, preferably in the range from 3 to 4, and wherein the stretching in the transverse direction is carried out at a temperature of less than 130°C, preferably less than 120°C, at a stretching ratio in the transverse direction of greater than 7.5, preferably in the range from 8 to 11.

10. The process of one of claims 8 and 9, wherein the stretching of the film in the transverse direction is followed by a setting step, in which the film transport in the tenter frame is continued at a temperature of from 20 to 40°C below the stretching temperature, in particular at a temperature below 110°C, preferably below 80°C.

11. The process of claim 10, wherein the convergence during the setting step is from 5 to 15%.

12. The use of a film of one of claims 1-7 as a shrink label.

## Revendications

1. Feuille rétractable, transparente, comprenant une couche de base contenant un mélange de polypropylène et d'une résine hydrocarbonée, caractérisée en ce que la couche de base est constituée de 60 à 95 % en poids d'un polymère du propylène et de 5 à 40 % en poids d'une résine hydrocarbonée hydrogénée ayant un point de ramollissement dans l'intervalle de 80 à 125 °C, les pourcentages en poids se rapportant au poids total du mélange utilisé pour la couche de base, et en ce que des deux côtés de la couche de base sont disposées des couches extérieures scellables à chaud et en ce que la feuille a un pouvoir de retrait supérieur à 15 % à 90 °C et supérieur à 35 % à 120 °C dans le sens transversal, et inférieur à 6 % à 90 °C et inférieur à 15 % à 120 °C dans le sens longitudinal, les pourcentages en poids étant toujours relatifs à la dilatation longitudinale respective de la feuille avant le processus de retrait, les valeurs de retrait indiquées ayant été toujours déterminées dans un four à circulation d'air, pendant 15 minutes, selon la norme DIN 40634.

2. Feuille selon la revendication 1, caractérisée en ce que la résine hydrocarbonée hydrogénée est une résine synthétique qui présente un point de ramollissement dans l'intervalle de 85 à 110 °C.

3. Feuille selon la revendication 1 ou 2, caractérisée en ce que les couches de surface qui sont disposées des deux côtés de la couche de base contiennent un polymère oléfinique scellable, pris parmi les homopolymères de l'éthylène, les copolymères de l'éthylène et du propylène, de l'éthylène ou du propylène et du butylène ou d'une autre alpha-oléfine avec 5 à 10 atomes de carbone, des terpolymères de l'éthylène, du propylène et du butylène, ou d'une alpha-oléfine avec 5 à 10 atomes de carbone ou de mélanges de ces polymères.

4. Feuille selon la revendication 3, caractérisée en ce que les couches extérieures contiennent des copolymères de l'éthylène-propylène, des copolymères de l'éthylène-butylène, des copolymères du propylène-butylène, des terpolymères de l'éthylène-propylène-butylène ou des mélanges de ces polymères.

5. Feuille selon l'une des revendications 1 à 4, caractérisée en ce qu'elle présente une épaisseur dans l'intervalle de 15 à 50 µm, de préférence de 20 à 45 µm, les couches extérieures ayant une épaisseur de 0,5 à 1,0 µm.

6. Feuille selon l'une des revendications 1 à 5, caractérisée en ce qu'elle possède un module E, dans le sens longitudinal, supérieur à 2000 N/mm² et un module E, dans le sens transversal, supérieur à 4000 N/mm².

7. Feuille selon l'une des' revendications 1 à 5, caractérisée en ce qu'elle possède une résistance à la déchirure, dans le sens longitudinal, supérieure à 130 N/mm² et une résistance à la déchirure, dans le sens transversal, supérieure à 220 N/mm².

8. Procédé pour la préparation d'une feuille selon l'une des revendications 1 à 7, dans lequel on prépare à l'aide de coextrusion à travers une filière plate d'abord une ébauche de feuille que l'on consolide sur un rouleau refroidisseur et ensuite on oriente dans le sens longitudinal et transversal par étirage, caractérisé en ce que les conditions dans le sens transversal sont établies de façon telle que la réfraction de la feuille étirée en longueur, mais non étirée dans le sens transversal, ne dépasse pas une valeur Δₙ = < 12 à 15·10⁻³.

9. Procédé selon la revendication 8, caractérisé en ce que l'étirage dans le sens longitudinal est mis en oeuvre à une température supérieure à 130 °C, de préférence dans l'intervalle de 135 à 150 °C, avec un rapport d'étirage inférieur à 4,5, de préférence dans l'intervalle de 3 à 4, et en ce que l'étirage dans le sens transversal est mis en oeuvre à une température inférieure à 130 °C, de préférence inférieure à 120 °C avec un rapport d'étirage dans le sens transversal supérieur à 7,5, de préférence dans l'intervalle de 8 à 11.

10. Procédé selon l'une des revendications 8 à 9, caractérisé en ce que l'étirage de la feuille dans le sens longitudinal est suivi d'une étape de fixation dans laquelle on conduit une feuille à une température inférieure de 20 à 40 °C à la température d'étirage, plus particulièrement à une température inférieure à 110 °C, de préférence à une température inférieure à 80 °C, dans le cadre d'étirage.

11. Procédé selon la revendication 10, caractérisé en ce que la convergence au cours de l'étape de fixation est de 5 à 15 %.

12. Utilisation d'une feuille selon l'une des revendications 1 à 7 en tant qu'étiquette rétractable.
